# EUROPEAN PATENT APPLICATION

(11) **EP 4 760 488 A1**
(43) Date of publication of application: **17.06.2026**
(21) Application number: 24218529.6
(22) Date of filing: 10.12.2024
(51) Int. Cl.: G06F 8/61, G06F 9/4401

(54) **GENERALIZED SOFTWARE ADMINISTRATION AND ARCHITECTURE FOR DEVICES INCLUDED IN A NETWORK FOR OPERATING BUILDING INFRASTRUCTURE DEVICES**

(71) Applicant: Tridonic GmbH & Co. KG, 6851 Dornbirn (AT)
(72) Inventor: Santiago, Alekssander, 6851 Dornbirn (AT)
(74) Representative: Beder, Jens

(57) **Abstract**

The invention is related to a device (1, 2) included in a network, for operating at least one building infrastructure device (3, 4) included in the network and establishing a communication in the network, comprising a first application controller (11, 21) configured to be in an operating mode and to have installed an operating software stack based on which at least one building infrastructure device is operated and communication in the network is established, and a second application controller (12, 22) configured to be in an idle mode, and the device (1, 2) is further configured to install on the first or second application controller (11, 12, 21, 22) a software stack to be installed different from the installed software stack. The invention is also related to a system thereof.

## Description

The invention relates to a generalized software administration and architecture for devices included in a network for operating building infrastructure devices.

When connecting a plurality of devices into a network for operating at least one building infrastructure device, the devices are commonly connected via a wireless network. Therefore, each component of the network requires means for wireless communication in combination with a software stack installed on each device that enables the device to operate at least one building infrastructure device and establish a connection in the network via the means for wireless communication. The software stack is organized in layers, with each layer handling specific aspects of wireless communication, from low-level hardware interfacing to high-level application protocols. Typically, the software stack may use various communication standards, such as Wi-Fi, Bluetooth or ZigBee.

However, a communication across different proprietary software stacks provided by different suppliers is generally not possible. The customer or supplier of the network devices must choose a software stack for laying out the network, such that each device of the network must support the chosen software stack.

In case the customer or supplier of the network desires to change the software stack of the network, either each device included in the network must be replaced by devices that support the chosen software stack or each device must be reconfigured manually by flashing the device and reinstalling the chosen software pack.

The latter manual reconfiguration is required, since each device comprises a bootloader software which enables the installation of the software stack. The bootloader software is also provided by the supplier. Thus, an installation of a software stack provided by a different supplier is usually not possible.

Furthermore, the current system architecture merely provides a single system on chip (SoC) so that loading of a new stack is impossible. That means, in case a device has been manually reconfigured, this device may then not communicate with the remaining devices in the network. Thus, the new software stack may not even be distributed over the entire network if one device has been reconfigured. In the context of the present invention, "new" also refers to an alternative software stack, for example provided by another supplier.

Consequently, the installation of a new software stack in a device of a network of said devices takes a significant amount of effort.

In order to overcome the above mentioned problems, this application provides a device included in a network, for operating at least one building infrastructure device included in the network and establishing a communication in the network and a system thereof according to the enclosed independent claims. The invention is defined in the appended claims. Advantageous features of the present invention are defined in the corresponding dependent claims.

A device included in a network, for operating at least one building infrastructure device included in the network and establishing communication in the network, comprising a first application controller operating in an operating mode and to have installed an operating software stack based on which at least one building infrastructure device is operated and communication in the network is established. Moreover, the device comprises a second application controller configured to be in an idle mode. The device is further configured to install on the first or second application controller a software stack to be installed different from the installed software stack.

The at least one building infrastructure device may be any operable device installed within a building infrastructure. For instance, the building infrastructure device may be any of an (emergency) luminaire, a sensor, a switch, lighting controller, a roller shutter or similar. Preferably, the building infrastructure device is part of a common lighting network.

Thus, the device as defined in the appended claims may preferably be realized as a user controller, a commissioning device for OEM or a luminaire controller. However, the device could be any similar device for operating at least one building infrastructure device included in the network and establishing a communication in the network.

The network refers to an interconnected system designed to provide controlled operation for a specific area, such as building, street, or outdoor environment. In case of a lighting network, it typically comprises, lighting fixtures, switches, dimmers, sensors, communication networks, power supply systems and mounting hardware.

In particular, it is not required for one network to have one communication network. Each device within the network may comprise means for DALI allowing the respective device to be integrated within a DALI network and to use the control and communication functionality of a DALI network. Moreover, the respective device may comprise means for alternative control and/or communication protocols. Standardized wired software stacks may be, yet not being limited to 0-10V DC, DMX, RDM, BACnet, LonWorks, KNX, X10, HomePlug or G.hn. Standardized wireless software stacks may be but are not limited to ZigBee, 6Lo WP AN, Z-Wave, EnOcean, Bluetooth Mesh, casambi or Matter.

Thus, establishing communication is realized by using the above mentioned software stacks for wireless and optionally, for wired communication.

The first and second application controller are preferably realized as SoC modules. Preferably, the first and second application controller are wireless SoC modules. Optionally, the first and second application controller may be realized on one or more SoC modules. Optionally, the first and second application controller may be realized on a plurality of non-SoC modules comprising the necessary means to have the same functionality as said SoC module. Optionally, the Soc is one of the Nordic nRF52840 or the STM STM32WL33CC.

Optionally, the application controller may comprise any wireless communication interface that allows to communicate with at least one other communication participant. Specifically, the above mentioned wireless software stacks may be used. The word "communication" may be referred to the ability of the interface to transmit and/or receive information. The communication between two or more communication participants may be a direct communication or an indirect communication. Direct communication does not use an intermediate communication participant for communication between the other at least two communication participants, whereas indirect communication does use at least one intermediate communication participant. The communication interface may be any wireless interface that allows transmission of information within the transmitted signal. The communication interface may comprise at least one antenna and a plurality of antennas may be arranged as separated antennas and/or as an antenna array. Information may be transmitted via a signal by common modulation techniques, in particular by Pulse Position Modulation (PPM), Pulse Amplitude Modulation (PAM), Binary Phase Shift Keying (BPSK), Quadrature Phase Shift Keying (QPSK), Quadrature Amplitude Modulation (QAM), Frequency Shift Keying (FSK). For reasons of efficiency, the signal may be encoded by common encoding techniques, in particular by Linear Block Codes, Convolutional Codes, Turbo Codes, Low Density Parity Check Codes, LT and Raptor Codes, Polar Codes or Space-Time Coding.

By operating mode, it is referred to a mode of the first or second application controller, in which the respective application controller runs the operating software stack or software stack to be installed for operating at least one device included in the network and establishing a communication in the network.

By idle mode, it is referred to a mode of the first or second application controller, in which the respective application controller does not operate at least one building infrastructure device. Optionally or alternatively, by idle mode, the respective application controller does not establish a communication in the network.

Note that in the context of this application to "run" a software by hardware means, means that the software is executed on the respective hardware means.

The operating software stack and the software to be installed are software stacks for enabling operation of at least one building infrastructure device and for enabling the establishment of a communication in the network.

The default software stack is a software stack for enabling the installation of the software to be installed.

In particular, the default software stack may comprise a generic bootloader software, wherein the bootloader software enables the installation of arbitrary software stacks.

An advantageous effect of the foregoing embodiment is that the devices included in the network may install a new software stack.

In an embodiment, the device is further configured to provide a default software stack for enabling the installation of the software to be installed.

An advantageous effect of the foregoing embodiment is that a software based solution is included to install a new software stack.

In an embodiment, the first and second application controller are further configured to communicate wirelessly with at least one device included in the network using the respectively installed software stack.

An advantageous effect of the foregoing embodiment is that a wireless communication between application controllers for different devices included in the network is established.

In an embodiment, the device further comprises a storage that is configured to store the default software stack for being installed on the first and/or second application controller.

The storage may be any device for storing information electronically. In particular, the storage may be realized as a flash memory, a Random Access Memory (RAM), a Read-Only Memor (ROM), an Electrically Erasable Programmable Read-Only Memory (EEPROM), a Hard Dsik Drive (HDD), hybrid drives, Non-Voltatile RAM (NVRAM) or cloud storage.

An advantageous effect of the foregoing embodiment is that the default software stack can be stored in the device.

In an embodiment, the device further comprises a control module that is configured to determine on which of the first or second application controller to install the software stack to be installed. The control module is further configured to load the default software stack from the storage into the first or second application controller that is in idle mode, and cause the respective application controller to install the software stack to be installed on the determined application controller based on the default software stack.

The control module may particularly be realized on as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

An advantageous effect of the foregoing embodiment is that a new software stack can be installed by using the new software architecture combined with the software based installation of the new software.

In an embodiment, the control module is further configured to control the determined application controller to be in an operating mode and to control the respective other application controller to be in an idle mode, after installation of the software stack to be installed on the respective application controller.

After installation of the software stack to be installed is understood to be a time information that refers to a period after installation of the software stack is finished.

Preferably, the period is directly after the installation of the software stack is finished.

An advantageous effect of the foregoing embodiment is that a mode switch between the application controller that uses the new software stack and the respective other controller is realized, for the common operation of the device within the network via the new software stack.

In an embodiment, the control module is further configured to install the default software stack on the application controller that is in idle mode, after installation of the software stack to be installed on the respective application controller.

Preferably, the period is directly after the installation of the software stack is finished.

An advantageous effect of the foregoing embodiment is that at least one application controller runs the default software stack.

In an embodiment, the device further comprises a control module configured to control the application controller, that is in idle mode and has installed a default software stack for enabling installation of the software stack to be installed, to communicate the software stack to be installed to at least one corresponding device included in the network.

The corresponding device it is meant to be au further device as claimed by the application.

By communicating the software stack to be installed it is meant that at least the information is communicated to enable the corresponding device to install the software stack to be installed. Thus, the information may also be in a compressed format or include information that allows the corresponding device to retrieve the software stack. In the context of this application, it is not distinguished between information being in normal or compressed format.

Preferably, the corresponding device installs the software stack to be installed by the application controller that runs the default software stack.

An advantageous effect of the foregoing embodiment is that the software to be installed can be forwarded to other corresponding devices included in the network without using capacities required for the common operation of the device within the network. The software stack to be installed will propagate through the network so that in the end the entire network, or rather the devices included in the network, will have received the software stack to be installed. Since every device may then installed the software stack to create an application controller operable to operate the devices in the network, the building infrastructure system is finally set up to be operated using a different software not compatible with the software previously used for operating the system.

By common or normal operation it is meant any operation that does not contribute to the communication or installation of the software to be installed.

In an embodiment, the first and second application controller communicate at different operating frequencies. Preferably, the different operating frequencies are 2.4 GHz or any of the sub-GHz range.

An advantageous effect of the foregoing embodiment is that the system architecture of the device is compatible with different operating frequencies.

In an embodiment, the device further comprises a communication interface configured to receive the software stack to be installed. Optionally or alternatively, the application controller that is in idle mode is further configured to receive the software stack to be installed. Optionally or alternatively the device further comprises a storage that is configured to have stored the software stack to be installed.

The communication interface may be a wired or wireless communication interface. Optionally, the wired or wireless interface may be any of the previously mentioned wired or wireless interfaces.

The storage may be realized as the storage as previously mentioned.

An advantageous effect of the foregoing embodiment is that the software stack to be installed can be provided by the device.

In an embodiment, the device further comprises a control module that is further configured to provide the received software stack for installation.

An advantageous effect of the foregoing embodiment is that the software stack to be installed can be provided by the control module.

A system comprises a plurality of devices according to any of the previously mentioned embodiments of the device.

An advantageous effect of the foregoing embodiment is that the each device within the system included in the network may install a new software stack.

In an embodiment of the system, a portable device according to any of the previously mentioned embodiments of the device is comprised, wherein the portable device is a commissioning device comprising a human machine interface that is configured to obtain control inputs for initiating transition to operation of the system based on the software stack to be installed.

The human machine interface may be any analog or digital interface that enables a user to perform control inputs. For instance, the human machine interface may be implemented on an app for commissioning installed on a smartphone, such that the user may use the touch-sensitive display of the smartphone combined with the app as a user interface.

The commissioning device may be any type of smartphone, tablet, laptop or similar portable electric device with a specific software implementation that enables the general hardware components to be operated as claimed. For instance, the commissioning device may be a smartphone that includes an app, which enables the smartphone to be operated as a commissioning device for lighting systems.

An advantageous effect of the foregoing embodiment is that the transition of at least the commissioning device can be manually controlled.

In an embodiment of the system, a first external storage is comprised, that is , connected to each device included in the system and configured to provide a default software stack for enabling the installation of the software stack to be installed to the at least one device and/or the portable device.

The storage may be realized as the storage as previously mentioned. However, the storage may in particular be realized in a server or cloud.

An advantageous effect of the foregoing embodiment is that each device in the network shares one storage for providing the default software stack.

In an embodiment of the system, a second external storage is comprised, that is connected to each device included in the system and configured to provide update data for the installed software stack to the at least one device and/or the portable device.

The storage may be realized as the storage as previously mentioned.

The update data may be any information required for updating a software stack. In particular, the update data may be firmware data.

An advantageous effect of the foregoing embodiment is that each device may be updated via the external storage.

In the following, preferred embodiments of the present application shall be described in more detail based on the corresponding figures.

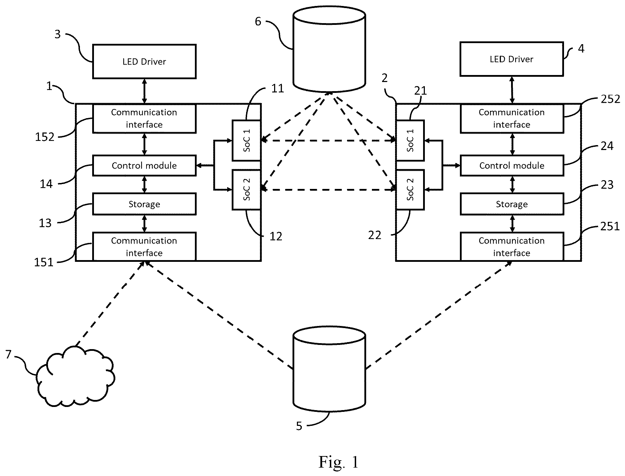

Figure 1 is a schematic view of a system according to an embodiment.

Figure 1 is a schematic view of a system according to an embodiment. The system comprises a first device 1 for operating at least one building infrastructure device 3 included in the network and establishing a communication in the network and a second device 2 thereof. Moreover, the system comprises LED drivers 3, 4, a first external storage 5, a second external storage 6 and a cloud storage 7.

The general layout of the system shows the components as well as arrows that indicate the direction of flow of information. In particular, solid lines indicate a wired connection, whereas dashed lines offer both options, namely wired or wireless connection. Generally, each shown component may be electrically connected to any of the other modules, which is not shown explicitly. The displayed arrows show the preferred information flow and its direction. The connection may be realized by an internal/external data exchange link. The internal/external data exchange link may be any one of Inter-Integrated Circuit (I2C), Serial Peripheral Interface (SPI), Universal Asynchronous Receiver/Transmitter (UART), Controller Area Network (CAN), Universal Serial Bus (USB), General Purpose Input/Output (GPIO), Peripheral Component Interconnect Express (PCIe), Ethernet or DALI.

Each of the first and second device 1, 2 may communicate with their corresponding LED drivers 3, 4 by using corresponding communication interfaces 152, 252. The communication interfaces 152, 252 preferably include DALI interfaces, such that the connection of the first and second device 1, 2 to the corresponding LED drivers 3, 4 is established via the DALI interface.

The first and second device 1, 2 may communicate with a first external storage 5 via the respective communication interfaces 151, 251.

The communication interfaces 151, 152 are preferably wireless communication interfaces, yet any wired communication interface would also be possible.

The external storage 5 is preferably a server. The first external storage 5 is configured to provide a default software stack for enabling the installation of the software stack to be installed on the devices 1, 2.

The first and second device 1, 2 may communicate with a second external storage 6 via the respective application controllers 11, 12, 21, 22.

The application controllers 11, 12, 21, 22 are preferably wireless SoC's.

The second external storage 6 is preferably a server. The second external storage 6 is configured to provide update data for the installed software stack to the at least one device and/or the portable device. Optionally, the update data may be firmware data. Optionally, the firmware data is compatible for the software installed on the application controllers 11, 12, 21, 22.

The first device 1 may wirelessly communicate with a cloud storage 7 via the communication module 151.

The cloud storage 7 may provide the software stacks to be installed on the respective application controllers 11, 12, 21, 22.

The first device 1 comprises the first application controller 11, the second application controller 12, a storage 13, a control module 14 and the communication interfaces 151, 152.

The second device 2 comprises the first application controller 21, the second application controller 22, a storage 23, a control module 24 and the communication interfaces 251, 252.

The first and second application controller 11, 12 of device 1 are wireless SoC's.

The first application controller 11 has installed an operating software stack based on which the LED driver 3 is operated and communication in the network, especially to device 2, is established when the first application controller 11 is in an operating mode. The wireless communication is based on the operating software stack that is installed.

A possible operation of the LED driver 3 may be to operate a PWM signal of the LED driver 3 in order to dim the LED, connected to the LED driver 3.

In the context of this application being operated also includes indirect operation via an intermediate device, like the control module 14.

The second application controller 12 has installed a default software stack for enabling the installation of the software to be installed. The wireless communication is based on the software stack that is installed. The second application controller 12 is in idle mode, meaning the LED driver 3 is not operated by the second application controller 12 and communication in the network, especially to device 2, is not established.

The control module 14 may particularly be realized on a Central Processing Unit (CPU), a Graphics Processing Unit (GPU), a Field Programmable Gate Array (FPGA), an Application-Specific Integrated Circuit (ASIC), a Digital Signal Processor (DSP), a Microcontroller (MCU) or on a SOC.

Note that the first application controller 11, the second application controller and the control module 14 may share the same hardware.

The storage 13 may be any device for storing information electrically. In particular, the storage may be realized as a flash memory, a Random Access Memory (RAM), a Read-Only Memory (ROM), an Electrically Erasable Programmable Read-Only Memory (EEPROM), a Hard Disk Drive (HDD), hybrid drives, Non-Volatile RAM (NVRAM) or cloud storage.

The storage 13 is configured to have stored the default software stack for being installed on the first and/or second application controller 11, 12. Optionally or alternatively, the storage 13 is configured to have stored the software stack to be installed.

The communication interface 151 is configured to receive the software stack to be installed from the first external storage 5.

The communication interface 151 is configured to communicate with the LED driver 3.

The same description can be applied to device 2 and its corresponding components.

As already mentioned, the first application controller 11 has installed the operating software stack based on which the LED driver 3 is operated and communication in the network, especially to device 2, is established when the first application controller 11 is in an operating mode.

The second application controller 12 is in idle mode.

In a first scenario, the control module 14 may receive a request to install a new operating software stack, that is different to the operating software stack, on application controller 11. The request may be provided by a human machine interface of the first device 1 in case the first device would be realized as a commissioning device.

The control module 14 is configured to determine on which of the first or second application controller 11, 12 to install the software stack to be installed. In the first scenario, the control module 14 determines that the software stack to be installed shall be installed on the first application controller 11.

The control module 14 loads the default software stack from the storage 13 into the second application controller 12 as it is in idle mode.

The control module 14 causes the respective application controller 12 to install the software stack to be installed on the determined application controller 11 by using the default software stack.

Note that the second application controller 12 is understood to be still in idle mode.

This installation may be realized by using a generic bootloader software of the default software stack that is compatible with any arbitrary operating software stack. The generic bootloader software may be used to install the software stack to be installed on the second application controller 12.

Optionally, after the installation is finished, the control module 14 is further configured to control the determined application controller 11 to be in an operating mode and to control the respective other application controller 12 to be in an idle mode.

Optionally, after the installation, during installation or before installation, the control module 14 is further configured to install the default software stack on the application controller 12 that is in idle mode.

After installation, during installation or before installation, the control module 14 control the application controller 12, that is in idle mode and has a default software stack installed, to communicate the software stack to be installed to the second device 2.

Note that by communicating the software stack to be installed, the second application controller 12 is understood to not to be in the idle mode anymore.

Preferably, the software stack could be communicated before installation to the other devices included in the network and to which device 1 established a communication. By this procedure, the time is reduced, in which operating at least one building infrastructure device would not be possible.

The device 2 then receives the software stack to be installed, without communicating with the cloud storage 7.

In particular, the first application controller 21 of device 2 is in operating mode and has installed the same operating software as the first application controller 11 of device 1.

The second application controller 22 of device 2 is in idle mode and has installed the same default software stack as the second application controller 12 of device 1.

Thus, the software to be installed is communicated over the channel of the second application controllers 12, 22 that have the same software installed.

The control module 24 may then receive a request to install a new operating software stack, that is different to the operating software stack, on application controller 21.

The control module 24 is configured to determine on which of the first or second application controller 21, 22 to install the software stack to be installed. In the first scenario, the control module 24 determines that the software stack to be installed shall be installed on the first application controller 21.

The control module 24 causes the respective application controller 22 to install the software stack to be installed on the determined application controller 21 by using the default software stack.

This installation may be realized by using a generic bootloader software of the default software stack that is compatible with any arbitrary operating software stack. The generic bootloader software may be used to install the software stack to be installed on the second application controller 22.

Optionally, after the installation is finished, the control module 24 is further configured to control the determined application controller 21 to be in an operating mode and to control the respective other application controller 22 to be in an idle mode.

Optionally, after the installation, during installation or before installation, the control module 24 is further configured to install the default software stack on the application controller 22 that is in idle mode.

## Claims

1. A device (1, 2) included in a network, for operating at least one building infrastructure device (3, 4) included in the network and enabling communication in the network, comprising
a first application controller (11, 21) in an operating mode and to have installed an operating software stack based on which at least one building infrastructure device is operated and communication in the network is established, and
a second application controller (12, 22) in an idle mode, and
the device (1, 2) is further configured to install on the first or second application controller (11, 12, 21, 22) a software stack to be installed different from the installed software stack.

2. The device (1, 2) according to claim 1, wherein
the device (1, 2) is further configured to provide a default software stack for enabling the installation of the software to be installed.

3. The device (1, 2) according to any of the preceding claims, wherein
the first and second application controller (11, 12, 21, 22) are further configured to communicate wirelessly with at least one other device (1, 2) included in the network using a respectively installed software stack.

4. The device (1, 2) according to claim 2, further comprising
a storage (13, 23) that is configured to store the default software stack for being installed on the first and/or second application controller (11, 12, 21, 22).

5. The device (1, 2) according to claim 4, further comprising
a control module (14, 24) that is configured to determine on which of the first or second application controller (11, 12, 21, 22) to install the software stack to be installed , wherein the control module (14, 24) is further configured to
load the default software stack from the storage (13, 23) into the first or second application controller (11, 12, 21, 22) that is in idle mode, and cause the respective first or second application controller to install the software stack to be installed on the determined application controller based on the default software stack.

6. The device (1, 2) according to claim 5, wherein
the control module (14, 24) is further configured to control the determined first or second application controller to operate in an operating mode and to control the respective other application controller to be in an idle mode, after installation of the software stack to be installed on the respective application controller.

7. The device (1, 2) according to any of claims 5 to 6, wherein
the control module (14, 24) is further configured to install the default software stack on the application controller that is in idle mode, after installation of the software stack to be installed on the respective first or second application controller.

8. The device (1, 2) according to any of the preceding claims, wherein
the control module (14, 24) is further configured to control the first four second application controller, that is in idle mode and has installed a default software stack for enabling the installation of the software stack to be installed, to communicate the software stack to be installed to at least one corresponding device (1, 2) included in the network.

9. The device (1, 2) according to any of the preceding claims, wherein
the first and second application controller (11, 12, 21, 22) are configured to communicate at different operating frequencies.

10. The device (1, 2) according to any of the preceding claims, further comprising
a communication interface (151) configured to receive the software stack to be installed; and/or
the application controller that is in idle mode is further configured to receive the software stack to be installed; and/or
The storage (13, 23) that is configured to store the software stack to be installed.

11. The device (1, 2) according to any of the preceding claims, wherein
The control module (14, 24) is further configured to provide the received software stack for installation.

12. A system, comprising
A plurality of devices according to any of the preceding claims 1 to 11.

13. The system according to claim 12, further comprising
a device according to any of the preceding claims 1 to 11, wherein
the device is a portable device, and the portable device is a commissioning device comprising a human machine interface that is configured to obtain control inputs for initiating transition to operation of the system based on the software stack to be installed.

14. The system according to any of the claims 12 to 13, comprising
a first external storage (5), connected to at least one device (1, 2) included in the system, and configured to provide a default software stack for enabling the installation of the software stack to be installed to the plurality of devices and/or the portable device.

15. The system according to any of the claims 12 to 14, comprising
a second external storage (6), connected to at least one device (1, 2) included in the system, and configured to provide update data for the installed software stack to the at least one device (1, 2) and/or the portable device.

## Amended claims

### Amended claims in accordance with Rule 137(2) EPC.

1. A device (1, 2) included in a network, for operating at least one building infrastructure device (3, 4) included in the network and enabling communication in the network, comprising
a first application controller (11, 21) in an operating mode and having installed an operating software stack based on which at least one building infrastructure device is operated and communication in the network is established, and
a second application controller (12, 22) in an idle mode, and
the device (1, 2) is further configured to install on the first or second application controller (11, 12, 21, 22) a software stack to be installed different from the installed software stack; wherein the device (1, 2) is further configured to provide a default software stack for enabling the installation of the software stack to be installed, and the default software stack comprises a generic bootloader software, wherein the bootloader software enables the installation of arbitrary software stacks.

2. The device (1, 2) according to claim 1, wherein
the first and second application controller (11, 12, 21, 22) are further configured to communicate wirelessly with at least one other device (1, 2) included in the network using a respectively installed software stack.

3. The device (1, 2) according to claim 1, further comprising
a storage (13, 23) that is configured to store the default software stack for being installed on the first and/or second application controller (11, 12, 21, 22).

4. The device (1, 2) according to claim 3, further comprising
a control module (14, 24) that is configured to determine on which of the first or second application controller (11, 12, 21, 22) to install the software stack to be installed , wherein the control module (14, 24) is further configured to
load the default software stack from the storage (13, 23) into the first or second application controller (11, 12, 21, 22) that is in idle mode, and cause the respective first or second application controller to install the software stack to be installed on the determined application controller based on the default software stack.

5. The device (1, 2) according to claim 4, wherein
the control module (14, 24) is further configured to control the determined first or second application controller to operate in an operating mode and to control the respective other application controller to be in an idle mode, after installation of the software stack to be installed on the respective application controller.

6. The device (1, 2) according to any of claims 4 to 5, wherein
the control module (14, 24) is further configured to install the default software stack on the application controller that is in idle mode, after installation of the software stack to be installed on the respective first or second application controller.

7. The device (1, 2) according to any of the preceding claims, wherein
the control module (14, 24) is further configured to control the first four second application controller, that is in idle mode and has installed a default software stack for enabling the installation of the software stack to be installed, to communicate the software stack to be installed to at least one corresponding device (1, 2) included in the network.

8. The device (1, 2) according to any of the preceding claims, wherein
the first and second application controller (11, 12, 21, 22) are configured to communicate at different operating frequencies.

9. The device (1, 2) according to any of the preceding claims, further comprising
a communication interface (151) configured to receive the software stack to be installed; and/or
the application controller that is in idle mode is further configured to receive the software stack to be installed; and/or
the storage (13, 23) that is configured to store the software stack to be installed.

10. The device (1, 2) according to any of the preceding claims, wherein
the control module (14, 24) is further configured to provide the received software stack for installation.

11. A system, comprising
A plurality of devices according to any of the preceding claims 1 to 11.

12. The system according to claim 11, further comprising
a device according to any of the preceding claims 1 to 11, wherein
the device is a portable device, and the portable device is a commissioning device comprising a human machine interface that is configured to obtain control inputs for initiating transition to operation of the system based on the software stack to be installed.

13. The system according to any of the claims 11 to 12, comprising
a first external storage (5), connected to at least one device (1, 2) included in the system, and configured to provide a default software stack for enabling the installation of the software stack to be installed to the plurality of devices and/or the portable device.

14. The system according to any of the claims 11 to 13, comprising
a second external storage (6), connected to at least one device (1, 2) included in the system, and configured to provide update data for the installed software stack to the at least one device (1, 2) and/or the portable device.
